(19) Europäisches Patentamt
European Patent Office
Office européen des brevets

(11) **EP 3 438 200 B1**

(12) **EUROPEAN PATENT SPECIFICATION**

(45) Date of publication and mention
of the grant of the patent:
**07.10.2020 Bulletin 2020/41**

(51) Int Cl.:
**C08L 63/00** *(2006.01)*  **C08G 59/20** *(2006.01)*
**C08K 3/00** *(2018.01)*  **H02K 3/30** *(2006.01)*
**C08L 63/10** *(2006.01)*

(21) Application number: **16897096.0**

(22) Date of filing: **21.12.2016**

(86) International application number:
**PCT/JP2016/088053**

(87) International publication number:
**WO 2017/168880 (05.10.2017 Gazette 2017/40)**

(54) **CURABLE COMPOSITION, CURED OBJECT OBTAINED THEREFROM, AND ROTARY DEVICE**

HÄRTBARE ZUSAMMENSETZUNG, DARAUS ERHALTENES GEHÄRTETES OBJEKT UND DREHVORRICHTUNG

COMPOSITION DURCISSABLE, OBJET DURCI OBTENU À PARTIR DE CELLE-CI ET DISPOSITIF ROTATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2016 JP 2016071396**

(43) Date of publication of application:
**06.02.2019 Bulletin 2019/06**

(73) Proprietor: **Mitsubishi Electric Corporation Chiyoda-ku
Tokyo 100-8310 (JP)**

(72) Inventors:
• **OSAWA, Azusa**
**Tokyo 100-8310 (JP)**
• **MABUCHI, Takahiro**
**Tokyo 100-8310 (JP)**
• **YASUDA, Naoki**
**Tokyo 100-8310 (JP)**

(74) Representative: **Trinks, Ole
Meissner Bolte Patentanwälte
Rechtsanwälte Partnerschaft mbB
Widenmayerstraße 47
80538 München (DE)**

(56) References cited:
**WO-A1-2009/110345    WO-A1-2015/056508
JP-A- H0 912 676    JP-A- H08 239 555
JP-A- S55 166 467    JP-A- S59 207 606
JP-A- 2005 263 855    JP-A- 2005 330 390
JP-A- 2005 330 390    JP-A- 2006 176 678
US-A1- 2015 349 599**

**Description**

TECHNICAL FIELD

The present invention relates to a curable composition, a cured product thereof, and a rotary device.

BACKGROUND ART

Japanese Patent Laying-Open JP 2006-057 017 A1 (PTD 1) discloses a resin composition including an epoxy resin, a curing agent for the epoxy resin, a coupling agent, and inorganic particles.

JP 2005 330 390 A (PTD 2) relates to an epoxy resin composition, which comprises a main epoxy resin comprising 1,6-diglycidylnaphthalene, a sub-epoxy resin except the main epoxy resin, an inorganic filler, and a curing agent. The epoxy resin composition is excellent in resistance to heat cycles and moldability.

JP 2005 263 855 A (PTD 3) describes a resin composition for impregnation having highly persistent heat resistance and strong adhesiveness at a high temperature. The resin composition is produced by adding 25 wt% epoxy acrylate, especially novolac type epoxy, to 75 wt% mixed resin of a polyester resin with an epoxy resin conventionally used for coils of big high voltage rotative equipment.

US 2015/349599 A1 (PTD 4) discloses a stator coil for a rotating electrical machine, the stator coil including a stator iron core and a coil formed by winding an enamel wire around a slot of the stator iron core, in which the enamel wire is covered with a cured product of a first insulating varnish containing a polyester resin and the coil is covered with a cured product of a second insulating varnish containing an epoxy acrylate resin.

JP S55 166467 A (PTD 5) describes a method of manufacturing a stator of a rotating electrical machine, and more particularly, to a method of insulating a coil portion and a method of shaping a coil end portion.

WO 2015/056508 A1 (PTD 6) discloses a water-dispersed insulating varnish composition characterized by being prepared by mixing a heat-curable resin that has at least two (meth)acryloyl groups per molecule, a polyfunctional vinyl monomer that can be dissolved in the heat-curable resin and has at least two (meth)acryloyl or allyl groups per molecule, an organic peroxide that serves as a reaction initiator, a surfactant that serves as a dispersant, and water together.

CITATION LIST

PATENT DOCUMENT

PTD 1: Japanese Patent Laying-Open JP 2006-057 017 A1 (paragraph 0028)
PTD 2: JP 2005 330 390 A
PTD 3: JP 2005 263 855 A
PTD 4: US 2015/349599 A1
PTD 5: JP S55 166467 A
PTD 6: WO 2015/056508 A1

SUMMARY OF INVENTION

TECHNICAL PROBLEM

A curable epoxy resin composition is used for the insulation treatment of heavy electrical machinery and the like. For example, in a rotary device, a mica tape wound around a coil conductor is impregnated with a curable epoxy resin composition. The curable epoxy resin composition is heated to form a cured product. An insulating layer covering the coil conductor is thus formed.

In order to improve the insulation lifetime and the reliability of the rotary device, a cured product with improved insulation performance and heat resistance has been requested. In response to this request, there has been proposed a composite material obtained by dispersing nano-order inorganic particles in a curable epoxy resin composition. Since the inorganic particles are dispersed in the cured product, improvement of the dielectric breakdown strength can, for example, be expected.

However, the inorganic particles (inorganic substance) have a low miscibility with the epoxy resin (organic substance). Therefore, the composite material is likely to experience aggregation of the inorganic particles. Furthermore, when the particle size is nano-order, this tendency is more noticeable. When the aggregation of the inorganic particles occurs, the inorganic particles are likely to precipitate. In addition, a void is likely to be formed around the aggregate. The void may serve as a starting point of partial discharge in the cured product. Therefore, in consideration of the partial discharge resistance and the like, the insulation performance may be still insufficient.

According to PTD 1, the inorganic particles and the epoxy resin are coupled by the coupling agent and the like, which leads to improvement of the dispersibility of the inorganic particles.

However, in order to achieve a desired dispersed state in this configuration, a large amount of coupling agent is required. The coupling agent is lower in heat resistance than the epoxy resin. Therefore, when a large amount of coupling agent is used, the heat resistance of the cured product may be reduced.

Furthermore, the coupling agent is inferior in dielectric breakdown strength to the epoxy resin. An insulation deterioration path is likely to develop through a weak insulating portion. Therefore, when the coupling agent is dispersed in the cured product, the dielectric breakdown may occur through the coupling agent. That is, when the coupling agent is used, the effect of the improvement of the dielectric breakdown strength produced by dispersion of the inorganic particles can be canceled out.

The present invention has been made to solve the above-described problem. That is, an object of the present invention is to provide a curable composition in which a reduction in heat resistance is suppressed and the insulation performance is improved.

SOLUTION TO PROBLEM

A curable composition (X) in the present invention includes: an epoxy resin (A); a curing agent (B); a curing promoter (C); and hydrophilic inorganic particles (D). The epoxy resin (A) includes a first epoxy resin (a1) and a second epoxy resin (a2). The first epoxy resin (a1) is a chain aliphatic epoxy resin having a hydrophilic group, and an aqueous dissolution rate of the first epoxy resin (a1) is not less than 20 mass % and not more than 99 mass %, wherein the aqueous dissolution rate means a dissolution rate of an epoxy resin to water at room temperature (25 °C). The second epoxy resin (a2) includes at least one selected from the group consisting of a cyclic aliphatic epoxy resin, an aromatic epoxy resin and a heterocyclic epoxy resin. The first epoxy resin (a1) comprises, as at least one resin included therein, an unsaturated polyester resin (a3) including two or more (meth)acryloyl groups in one molecule and having a hydrophilic group. The unsaturated polyester resin (a3) is an epoxy acrylate resin obtained by introducing a (meth)acryloyl group into an epoxy resin having a hydrophilic group.

ADVANTAGEOUS EFFECTS OF INVENTION

In the curable composition (X), the first epoxy resin (a1) and the hydrophilic inorganic particles (D) are both hydrophilic. Due to interaction between the first epoxy resin (a1) and the hydrophilic inorganic particles (D), the hydrophilic inorganic particles (D) are surrounded by the first epoxy resin (a1), and thus, aggregation of the hydrophilic inorganic particles (D) is suppressed. That is, the hydrophilic inorganic particles (D) can be dispersed without dependence on a coupling agent. Therefore, a reduction in heat resistance caused by addition of the coupling agent can be suppressed. In addition, improvement of the insulation performance produced by dispersion of the inorganic particles can be achieved.

BRIEF DESCRIPTION OF DRAWINGS

FIG. 1    is a conceptual diagram showing a cured product according to a first embodiment of the present invention.
FIG. 2    is a conceptual diagram showing a cured product according to a reference embodiment.
FIG. 3    is a flowchart showing an overview of a method for manufacturing a curable composition according to the first embodiment of the present invention.
FIG. 4    is a schematic view showing a main portion of a rotary device according to a second embodiment of the present invention.
FIG. 5    is a graph showing a plotted relation between an addition rate of an unsaturated polyester resin and the curing time of the curable composition.

DESCRIPTION OF EMBODIMENTS

Embodiments of the present invention will be described hereinafter. However, the present invention should not be limited to the embodiments described below.

First Embodiment

A first embodiment of the present invention is directed to a curable composition (X) and a cured product (Y) thereof.

Curable Composition (X)

The curable composition (X) includes an epoxy resin (A), a curing agent (B), a curing promoter (C), and hydrophilic inorganic particles (D). The curable composition (X) may be heat-curable. Alternatively, the curable composition may be photo-curable.

Epoxy Resin (A)

The curable composition (X) includes preferably not less than 46 volume % and not more than 98 volume % (more preferably not less than 50 volume % and not more than 97 volume %, and further preferably not less than 70 volume % and not more than 95 volume %) of the epoxy resin (A). Within this range, a good balance is achieved between the insulation performance of the cured product (Y) and the mechanical property (such as, for example, toughness).
The epoxy resin (A) includes a first epoxy resin (a1) and a second epoxy resin (a2).

First Epoxy Resin (a1)

The first epoxy resin (a1) is a chain aliphatic epoxy resin having a hydrophilic group. The first epoxy resin (a1) exhibits a specific water solubility. That is, an aqueous dissolution rate of the first epoxy resin (a1) is not less than 20 mass % and not more than 99 mass % (preferably not less than 30 mass % and not more than 90 mass %, more preferably not less than 40 mass % and not more than 80 mass %, and most preferably not less than 50 mass % and not more than 70 mass %).
"Aqueous dissolution rate" means a dissolution rate [unit: mass %] of an epoxy resin to the water at room temperature. That is, a ratio of an epoxy resin actually dissolved in the water when the epoxy resin is dissolved in the water adjusted to 25°C $\pm$ 1 °C corresponds to the aqueous dissolution rate. Specifically, the aqueous dissolution rate is measured as follows. 100 g of the water adjusted to 25 $\pm$ 1 °C is prepared. With the water being stirred well, an epoxy resin is gradually dripped into the water. A percentage of a value obtained by dividing an amount of the dripped epoxy resin until a mixed liquid reaches a saturated state by the mass (100 g) of the water corresponds to the aqueous dissolution rate. Whether or not the epoxy resin has been dissolved is determined based on the absence of turbidity in the mixed liquid and no occurrence of separation after being left to stand.
If the aqueous dissolution rate of the first epoxy resin (a1) is less than 20 mass %, it is difficult to sufficiently disperse the hydrophilic inorganic particles (D). If the aqueous dissolution rate exceeds 99 mass %, the heat resistance of the cured product (Y) may be reduced.
The first epoxy resin (a1) is a chain aliphatic compound. The first epoxy resin (a1) may be a straight-chain form. The first epoxy resin (a1) may be branched. The first epoxy resin (a1) has a hydrophilic group. The hydrophilic group is, for example, a hydroxy group, an ether group, a carboxy group or the like.
The first epoxy resin (a1) has one or more epoxy groups in one molecule. That is, the first epoxy resin (a1) is a univalent or polyvalent glycidyl compound. The first epoxy resin (a1) is preferably a glycidyl ether compound. The first epoxy resin (a1) is more preferably a polyglycidyl ether compound having a glycerol skeleton. Since the first epoxy resin (a1) is any of these compounds, the aqueous dissolution rate is easily adjusted to fall within the range of not less than 20 mass % and not more than 99 mass %.
Specific examples of the first epoxy resin (a1) include, for example, ethylene glycol diglycidyl ether, diethylene glycol diglycidyl ether, triethylene glycol diglycidyl ether; polyglycidyl ether; glycerol polyglycidyl ether, diglycerol polyglycidyl ether; trimethylolpropane polyglycidyl ether, sorbitol polyglycidyl ether, pentaerythritol polyglycidyl ether; resorcinol diglycidyl ether, neopentyl glycol diglycidyl ether; hydrogenated bisphenol A-type diglycidyl ether; polyethylene glycol diglycidyl ether, polypropylene glycol diglycidyl ether; and the like. One of the above-described compounds may be used alone as the first epoxy resin (a1). Two or more compounds may be combined and used as the first epoxy resin (a1). That is, the first epoxy resin (a1) may be at least one selected from the above-described compound group.
Examples of a product that can be used as the first epoxy resin (a1), of the commercially available products, include, for example, Denacol EX-121, Denacol EX-171, Denacol EX-192, Denacol EX-211, Denacol EX-212, Denacol EX-313, Denacol EX-314, Denacol EX-321, Denacol EX-411, Denacol EX-421, Denacol EX-512, Denacol EX-521, Denacol EX-611, Denacol EX-612, Denacol EX-614, Denacol EX-622, Denacol EX-810, Denacol EX-811, Denacol EX-850, Denacol EX-851, Denacol EX-821, Denacol EX-830, Denacol EX-832, Denacol EX-841, Denacol EX-861, Denacol EX-911, Denacol EX-941, Denacol EX-920, and Denacol EX-931 (all are manufactured by Nagase Chemtex Corporation);

Epolight M-1230, Epolight 40E, Epolight 100E, Epolight 200E, Epolight 400E, Epolight 70P, Epolight 200P, Epolight 400P, Epolight 1500NP, Epolight 1600, Epolight 80MF, and Epolight 100MF (all are manufactured by Kyoeisha Chemical Co., Ltd.); Adeka Glycirol ED-503, Adeka Glycirol ED-503G, Adeka Glycirol ED-506, and Adeka Glycirol ED-523T (all are manufactured by ADEKA Corporation); and the like.

The first epoxy resin (a1) has a viscosity of preferably not less than 20 mPa•s and not more than 21200 mPa•s (more preferably not less than 20 mPa•s and not more than 5000 mPa•s, further preferably not less than 40 mPa•s and not more than 650 mPa•s, and most preferably not less than 90 mPa•s and not more than 200 mPa•s). Within this range, a good balance is achieved between the dispersibility of the hydrophilic inorganic particles (D) and the dispersion stability.

"Viscosity" is measured using an E-type viscometer. A measurement temperature is set at 25 ± 1 °C. A rotation speed of the viscometer is set at 40 rpm. However, depending on the viscosity of an object to be measured, the rotation speed of the viscometer may be changed within the range of 10 to 120 rpm.

Second Epoxy Resin (a2)

The second epoxy resin (a2) includes at least one selected from the group consisting of a cyclic aliphatic epoxy resin, an aromatic epoxy resin and a heterocyclic epoxy resin. The second epoxy resin (a2) is an ingredient for providing the heat resistance to the cured product (Y).

The cyclic aliphatic epoxy resin includes one or more epoxy groups and one or more aliphatic carbon rings (non-aromatic carbon rings) in one molecule. Specific examples of the cyclic aliphatic epoxy resin include, for example, alicyclic diepoxy adipate, alicyclic diepoxy carboxylate, vinylcyclohexene dioxide, 4-vinylcyclohexene-1,2-epoxide and the like.

The aromatic epoxy resin includes one or more epoxy groups and one or more aromatic rings in one molecule. Specific examples of the aromatic epoxy resin include, for example, bisphenol A-type epoxy resin, bisphenol F-type epoxy resin, bisphenol AD-type epoxy resin, brominated bisphenol-type epoxy resin, phenol novolak-type epoxy resin, cresol novolak-type epoxy resin, glycidyl ester-type epoxy resin, glycidyl amine-type epoxy resin and the like.

The heterocyclic epoxy resin includes one or more epoxy groups and one or more hetero rings in one molecule. Specific examples of the heterocyclic epoxy resin include, for example, epoxy resin having a triazine ring, hydantoin-type epoxy resin and the like.

Of the above-described specific examples of the cyclic aliphatic epoxy resin, the above-described specific examples of the aromatic epoxy resin, and the above-described specific examples of the heterocyclic epoxy resin, one compound may be used alone as the second epoxy resin (a2). Two or more compounds may be combined and used as the second epoxy resin (a2).

A ratio of the first epoxy resin (a1) to a total of the first epoxy resin (a1) and the second epoxy resin (a2) is preferably not less than 26 volume % and not more than 54 volume % (more preferably not less than 27 volume % and not more than 46 volume %). Within this range, a balance between the insulation performance and the heat resistance tends to be good.

Curing Agent (B)

The curing agent (B) reacts with the epoxy resin (A) to cure the epoxy resin (A). Examples of the curing agent (B) (for the epoxy resin (A)) include, for example, an amine-based curing agent, an acid anhydride-based curing agent, an imidazole-based curing agent, a polymercaptan-based curing agent, a phenol-based curing agent, a Lewis acid-based curing agent, an isocyanate-based curing agent and the like.

Specific examples of the amine-based curing agent include, for example, ethylenediamine, 1,3-diaminopropane, 1,4-diaminobutane, hexamethylenediamine, dipropylene diamine, polyether diamine, 2,5-dimethyl hexamethylene diamine, trimethyl hexamethylene diamine, diethylenetriamine, iminobispropylamine, bis(hexamethyl)triamine, triethylenetetramine, tetraethylenepentamine, pentaethylenehexamine, aminoethylethanolamine, tri(methylamino)hexane, dimethylaminopropylamine, diethylaminopropylamine, methyliminobispropylamine, menthenediamine, isophorondiamine, bis(4-amino-3-methyldicyclohexyl)methane, diaminodicyclohexylmethane, bis(aminomethyl)cyclohexane, N-aminoethylpiperazine, 3,9-bis(3-aminopropyl)-2,4,8,10-tetraoxaspiro[5,5]undecane, m-xylenediamine, metaphenylenediamine, diaminodiphenylmethane, diaminodiphenylsulfone, diaminodiethyl diphenylmethane, dicyandiamide, organic acid dihydrazide and the like. However, these are merely provided by way of example. Use of an amine-based curing agent other than these does not depart from the scope of the present invention.

Specific examples of the acid anhydride-based curing agent include, for example, methyltetrahydrophthalic anhydride, methylhexahydrophthalic anhydride, methylnadic anhydride and the like. However, these are merely provided by way of example. Use of an acid anhydride-based curing agent other than these does not depart from the scope of the present invention.

Specific examples of the imidazole-based curing agent include, for example, 2-methylimidazole, 2-undecylimidazole, 1,2-dimethylimidazole, 2-ethyl-4-methylimidazole, 2-heptadecylimidazole, 2-phenylimidazole, 2-phenyl-4-methylimidazole, 1-benzyl-2-methylimidazole, 1-benzyl-2-phenylimidazole and the like. However, these are merely provided by way of example. Use of an imidazole-based curing agent other than these does not depart from the scope of the present invention.

A blending amount of the curing agent (B) may be adjusted as appropriate, depending on the type of the epoxy resin (A), the type of the curing agent (B) and the like. The blending amount of the curing agent (B) is preferably approximately not less than 0.5 equivalent and not more than 2 equivalent with respect to an epoxy equivalent of the epoxy resin (A). If the blending amount of the curing agent (B) is less than 0.5 equivalent, sufficient progress of curing of the epoxy resin (A) may be prevented. If the blending amount of the curing agent (B) exceeds 2 equivalent, the heat resistance, the mechanical property and the like of the cured product may be reduced.

Curing Promoter (C)

The curing promoter (C) promotes curing of the epoxy resin (A). Alternatively, the curing promoter (C) controls curing of the epoxy resin (A). Examples of the curing promoter (C) include, for example, tertiary amine and an salt thereof, a quaternary ammonium compound, imidazole, alkali metal alkoxide and the like. However, these are merely provided by way of example. Use of a curing promoter other than these does not depart from the scope of the present invention.

A blending amount of the curing promoter (C) is preferably approximately not less than 0.01 mass % and not more than 30 mass % (more preferably approximately not less than 0.05 mass % and not more than 20 mass %) with respect to the mass of the epoxy resin (A). If the blending amount is less than 0.01 mass %, the promoting effect may be small. If the blending amount exceeds 30 mass %, the storage stability of the curable composition (X), the moldability of the cured product (Y) and the like may be reduced.

Hydrophilic Inorganic Particles (D)

The curable composition (X) includes preferably not less than 2 volume % and not more than 54 volume % (more preferably not less than 3 volume % and not more than 50 volume %, and further preferably not less than 5 volume % and not more than 30 volume %) of the hydrophilic inorganic particles (D). A volume content of the hydrophilic inorganic particles (D) refers to a percentage of a value obtained by dividing the volume of the hydrophilic inorganic particles (D) by the volume of the curable composition (X). The volume of the hydrophilic inorganic particles (D) is obtained by dividing the mass of the powder by the true density of the hydrophilic inorganic particles (D).

In the range where the volume content of the hydrophilic inorganic particles (D) is not less than 2 volume %, the insulation performance (such as, for example, the initial breakdown voltage and the partial discharge resistance) of the cured product (Y) is significantly improved. In the range where the volume content of the hydrophilic inorganic particles (D) is not more than 54 volume %, the dispersibility of the hydrophilic inorganic particles (D) is good and the mechanical property of the cured product (Y) is also good. If the volume content of the hydrophilic inorganic particles (D) exceeds 54 volume %, the curable composition (X) has a higher viscosity and thus application to impregnation may be difficult.

The hydrophilic inorganic particles (D) are particles of an inorganic compound. The hydrophilic inorganic particles (D) have a high miscibility with water. Examples of the hydrophilic inorganic particles include, for example, metal oxides such as silicon oxide, magnesium oxide, aluminum oxide, zinc oxide, beryllium oxide, copper oxide, and cuprous oxide.

Preferably, the hydrophilic inorganic particles (D) have hydrophilic groups on surfaces. Examples of the hydrophilic group include, for example, a hydroxy group, a carboxy group, an amino group, a silanol group, a siloxane group and the like.

The hydrophilic group may be introduced by a surface modifier. Examples of the surface modifier include, for example, a silane coupling agent such as γ-glycidoxγ-propyltrimethoxysilane, γ-aminopropyl-trimethoxysilane, vinyltriethoxysilane, 3-methacryloxypropyltrimethoxysilane, and 3-glycidyloxypropyl-trimethoxysilane; a titanate-based coupling agent, an aluminate-based coupling agent; aluminum laurate, aluminum stearate, iron stearate; aluminum hydroxide; alumina, silica, zirconia; silicone; and the like.

More preferably, the hydrophilic inorganic particles (D) have silanol groups on the surfaces. Further preferably, the hydrophilic inorganic particles (D) are silicon oxide (silica) having silanol groups on a surface. Silica may be crystalline. Silica may be amorphous. Amorphous silica may be synthesized using, for example, a wet method, a dry method, a melting method and the like. Examples of the wet method include, for example, a precipitation method, a gel method and the like. Examples of the dry method include, for example, a flame hydrolysis method, an arc method, a plasma method and the like. Fumed silica synthesized using particularly the flame hydrolysis method, of these methods, may have a suitable amount of silanol groups on a surface.

An amount of the hydrophilic groups coupled to the surfaces of the hydrophilic inorganic particles (D) can be expressed by the hydrophilic group density on the particle surfaces. "Hydrophilic group density" refers to the number of the hydrophilic groups per unit area. The hydrophilic group density is preferably not less than $0.1/nm^2$ and not more than

10/nm$^2$ (more preferably not less than 2/nm$^2$ and not more than 5/nm$^2$). Within this range, the dispersibility of the hydrophilic inorganic particles (D) is good.

"Hydrophilic group density" of the hydrophilic inorganic particles (D) is obtained in accordance with the following equation (1):

$$S_i = (H \times 7312.5) \div (S_b \times S_m \times T) \qquad \cdots (1).$$

In the equation (1) above, $S_i$ represents the hydrophilic group density [unit: number/nm$^2$]. $S_b$ represents a sample amount [unit: g] of the powder. $S_m$ represents a specific surface area [unit: m$^2$/g] of the powder. T represents an absolute temperature [unit: K]. H represents an amount of hydrogen [unit: ml] generated when the dried powder ($S_b$ [g]) reacts with LiAlH$_4$ (Lithium Aluminum Hydride; LAH) in diethylene glycol dimethyl ether.

An average value of a primary particle size of the hydrophilic inorganic particles (D) is preferably not less than 0.5 nm and not more than 1200 nm (more preferably not less than 1 nm and not more than 1000 nm, further preferably not less than 5 nm and not more than 100 nm, and most preferably not less than 10 nm and not more than 50 nm). Within this range, the partial discharge resistance tends to be improved.

"Average value of the primary particle size" is measured by an image analysis method using a scanning electron microscope (SEM). The primary particle size refers to a particle size of primary particles. The particle size refers to a Feret diameter. The particle size of at least five primary particles is measured. The average value is an arithmetic average value.

A specific surface area of the hydrophilic inorganic particles (D) is preferably not less than 10 m$^2$/g and not more than 350 m$^2$/g (more preferably not less than 20 m$^2$/g and not more than 250 m$^2$/g, and further preferably not less than 30 m$^2$/g and not more than 200 m$^2$/g). Within this range, the dispersibility of the hydrophilic inorganic particles (D) is good. "Specific surface area" refers to a value measured using a gas adsorption method (BET method).

The surfaces of the hydrophilic inorganic particles (D) may be covered with hydrophilic polymers. The hydrophilic inorganic particles (D) may have a shell structure formed of a hydrophilic organic substance. Examples of such hydrophilic inorganic particles (D) include, for example, core-shell-type inorganic particles formed by a core of a metal oxide and a shell (covering layer) of a hydrophilic organic substance. Examples of the metal oxide serving as the core include, but not particularly limited to, zinc oxide, cerium oxide, aluminum oxide, zirconium oxide, cobalt oxide and the like. Examples of a product that can be used as the above-described core-shell-type hydrophilic inorganic particles, of the commercially available products, include core-shell-type cerium particles (manufactured by Hokko Chemical Industry Co., Ltd.) and the like.

Unsaturated Polyester Resin (a3)

The curable composition (X) includes an unsaturated polyester resin (a3) as at least one resin included in the first epoxy resin (a1).

The unsaturated polyester resin (a3) includes two or more (meth)acryloyl groups in one molecule and has a hydrophilic group. Examples of the hydrophilic group include, for example, a hydroxy group, an ether group, a carboxy group and the like. Since the unsaturated polyester resin (a3) has the hydrophilic group, the unsaturated polyester resin (a3) can improve the dispersibility of the hydrophilic inorganic particles (D) due to interaction with the hydrophilic inorganic particles (D), similarly to the first epoxy resin (a1).

When the curable composition (X) further includes such an unsaturated polyester resin (a3), an addition reaction of an unsaturated bond region (including the (meth)acryloyl groups) of the unsaturated polyester resin (a3) occurs through, for example, a free radical generated from organic peroxide. Therefore, the first epoxy resin (a1) and the second epoxy resin (a2) undergo the addition reaction with the unsaturated polyester resin (a3) through the free radical, simultaneously with ring-opening addition polymerization of the epoxy groups by the presence of a curing catalyst for the epoxy resin.

As a result, the first epoxy resin (a1), the second epoxy resin (a2) and the unsaturated polyester resin (a3) polymerize each other and three-dimensional crosslinking progresses efficiently, and thus, the crosslinking density increases in a short time. Therefore, the curing time of the curable composition (X) is reduced.

Specific examples of the unsaturated polyester resin (a3) include, for example, an epoxy(meth)acrylate resin (vinylester-based resin).

The epoxy(meth)acrylate resin refers to a resin obtained by an addition reaction between a (meth)acrylic acid and an epoxy compound, and resins having different properties can be obtained by changing a type of the epoxy compound, a ratio of addition of the (meth)acrylic acid and the like. Examples of the epoxy compound include, for example, a compound having a bisphenol A-based skeleton, a compound having a bisphenol E-based skeleton, a compound having a bisphenol F-based skeleton, a compound having a hydrogenated phthalic acid-based skeleton, a compound having a cresol novolak-based skeleton, a compound having a phenol novolak-based skeleton, a compound having a resorcin-based skeleton, a compound having a Techmore-based skeleton, a compound having a polyphenylene ether-based skeleton, and the like.

Examples of a product that can be used as the unsaturated polyester resin (a3), of the commercially available products, include Denacol Acrylate DA-212, DA-314, DA-314-90M, DA-910, DA-911M, DA-920, DA-931 (all are manufactured by Nagase Chemtex Corporation) and the like.

A ratio of a content of the unsaturated polyester resin (a3) to a total amount of the curable composition including the unsaturated polyester resin (a3) is preferably not less than 5 volume %. An upper limit of the above-described ratio of the content of the unsaturated polyester resin (a3) is, but not particularly limited to, not more than 54 volume %, for example.

When the curable composition (X) includes the unsaturated polyester resin (a3), the curable composition (X) normally further includes a curing agent for the unsaturated polyester resin (a3) and a curing promoter for the unsaturated polyester resin (a3).

Organic peroxide can, for example, be used as the curing agent (reaction initiator) for the unsaturated polyester resin (a3).

The organic peroxide is not particularly limited and organic peroxide known in the art can be used. Ketone peroxide-based peroxide, peroxy ketal-based peroxide, hydroperoxide-based peroxide, dialkyl peroxide-based peroxide, diacyl peroxide-based peroxide, peroxy ester-based peroxide, peroxydicarbonate-based peroxide or the like can be used as an example of the organic peroxide. These organic peroxides may be used alone, or two or more of these organic peroxides may be mixed and used.

Specific examples of the organic peroxide include, for example, 1,1-di(t-butylperoxy)cyclohexane, 1,1-di(t-hexylperoxy)cyclohexane, 1,1-di(t-hexylperoxy)-3,3,5-trimethylcyclohexane, 1,1-di(t-butylperoxy)-2-methylcyclohexane, 2,2-di(4,4-di-(butylperoxy)cyclohexyl)propane, n-butyl4,4-di-(t-butylperoxy)valerate, 2,2-di-(t-butylperoxy)butane, t-hexylperoxy isopropyl monocarbonate, t-butylperoxy maleate, t-butylperoxy-3,5,5-trimethylhexanoate, t-butylperoxy laurate, t-butylperoxy isopropyl monocarbonate, t-butylperoxy benzoate, t-butylperoxy acetate, t-hexylperoxy benzoate, 2,5-dimethyl-2,5-di(benzoylperoxy)hexane, t-butylperoxy2-ethylhexyl monocarbonate, di(2-t-butylperoxy isopropyl)benzene, dicumyl peroxide, di-t-hexyl peroxide, 2,5-dimethyl-2,5-di(t-butylperoxy)hexane, di-t-hexyl peroxide, t-butyl cumyl peroxide, di-t-butyl peroxide, 2,5-dimethyl-2,5-di(t-butylperoxy)hexyne-3, p-menthane hydroperoxide, t-butylperoxy allyl monocarbonate, methyl ethyl ketone peroxide, 1,1,3,3-tetramethylbutyl hydroperoxide, t-butyl hydroperoxide, cumene hydroperoxide, diisopropylbenzene hydroperoxide and the like. These may be used alone, or two or more of these may be mixed and used.

Examples of the curing promoter for the unsaturated polyester resin (a3) include, for example, metal soaps, metal chelates, amines and the like.

Examples of the metal soaps include, for example, zinc octylate, vanadium octylate, copper naphthenate, cobalt naphthenate, barium naphthenate and the like.

Examples of the metal chelates include, for example, vanadium acetylacetate, cobalt acetylacetate, iron acetylacetonate and the like.

Examples of the amines include, for example,
aniline, diethanol aniline,
N,N-substituted aniline [N,N-dimethylaniline, N,N-diethylaniline, N,N-bis(hydroxyethyl)aniline and the like],
p-toluidine, m-toluidine, N-ethyl-m-toluidine,
N,N-substituted-p-toluidine [N,N-dimethyl-p-toluidine, N,N-bis(2-hydroxyethyl)-p-toluidine, N,N-bis(2-hydroxypropyl)-p-toluidine and the like],
4-(N,N-substituted amino)benzaldehyde [4-(N,N-dimethylamino)benzaldehyde, 4-[N,N-bis(2-hydroxyethyl)amino]benzaldehyde, 4-(N-methyl-N-hydroxyethylamino)benzaldehyde and the like],
triethanolamine, diethylenetriamine, pyridine, phenylmorpholine, piperidine and the like.

Method for Manufacturing Curable Composition (X)

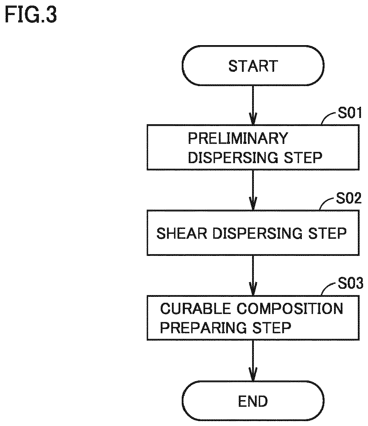

The curable composition (X) can be manufactured by the following manufacturing method. FIG. 3 is a flowchart showing an overview of the method for manufacturing the curable composition (X). The manufacturing method includes a preliminary dispersing step (S01), a shear dispersing step (S02) and a curable composition preparing step (S03). Each step will be described below.

Preliminary Dispersing Step (S01)

In the preliminary dispersing step (S01), the hydrophilic inorganic particles (D) are dispersed in the first epoxy resin (a1) to thereby prepare a first dispersion liquid.

A dispersing method in this step is not particularly limited. In this step, the hydrophilic inorganic particles (D) can be dispersed in the first epoxy resin (a1) by the means commonly used in the art. For example, a common planetary centrifugal mixer and the like can be used.

Shear Dispersing Step (S02)

In the shear dispersing step (S02), the first dispersion liquid and the second epoxy resin (a2) are sprayed into a prescribed nozzle at a high pressure. The shear force generated in the sprayed flow allows the hydrophilic inorganic particles to be crushed and dispersed in a liquid. A second dispersion liquid is thus prepared.

In this step, a wet-type high-pressure shear dispersing apparatus is suitably used.

The hydrophilic inorganic particles (D) are normally in an aggregated form of secondary particles, tertiary particles or the like. In this step, the strong shear force is applied to the hydrophilic inorganic particles (D) to crush the aggregation. The hydrophilic inorganic particles (D) are crushed to the extent of having a nano-order primary particle size. At the same time, the crushed hydrophilic inorganic particles (D) are dispersed in a medium. The second dispersion liquid is thus prepared.

At this time, due to interaction between the hydrophilic groups (such as, for example, the silanol groups) of the hydrophilic inorganic particles (D) and the hydrophilic group (such as, for example, the hydroxy group or the ether group) of the first epoxy resin (a1), the hydrophilic inorganic particles (D) are surrounded by the first epoxy resin (a1). Therefore, re-aggregation and precipitation of the hydrophilic inorganic particles (D) are suppressed. That is, a uniform dispersed state can be formed and this state can be maintained stably.

In this step, attention should be paid to the pressure applied to the dispersion liquid. The pressure applied to the dispersion liquid is preferably not less than 100 MPa and not more than 200 MPa (more preferably not less than 150 MPa and not more than 200 MPa). If the pressure is excessively high, the primary particles are crushed and an active surface is exposed. Therefore, re-aggregation is likely to occur. If the pressure is excessively low, the hydrophilic inorganic particles (D) cannot be sufficiently crushed and dispersed in some cases.

Curable Composition Preparing Step (S03)

In the curable composition preparing step (S03), the curing agent (B) and the curing promoter (C) are added to the second dispersion liquid and the mixture is stirred. The curable composition (X) is thus prepared.

A stirring method in this step is not particularly limited. In this step, the mixture can be stirred by the means commonly used in the art. For example, a common mixer and the like can be used. After stirring, vacuum deaeration treatment and the like may be performed as needed. As described above, the curable composition (X) can be manufactured.

In addition to the above-described indispensable ingredients, various types of additives that may be commonly blended in the art may be used. Such additives may be added in the shear dispersing step (S02).

Cured Product (Y)

The cured product (Y) is a cured product of the curable composition (X). The cured product (Y) is typically produced by heating the curable composition (X). The cured product (Y) is used in various forms and shapes, depending on applications. The cured product (Y) may be molded to a desired shape by various types of molding methods such as, for example, impregnation, application, casting, and sheet molding.

The cured product (Y) is excellent in insulation performance and heat resistance. Therefore, the cured product (Y) is suitable for an application that requires at least one of the insulation performance and the heat resistance. The cured product (Y) is, for example, suitable for an insulating member for heavy electrical machinery such as a rotary device and a transmission and transformation device. Examples of the insulating member include, for example, varnish, an insulating coating, a cable covering material, an insulating sheet, a sealing material and the like.

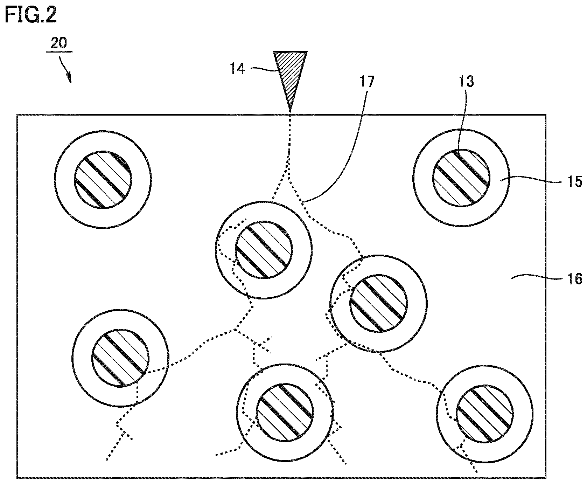

FIG. 2 is a conceptual diagram showing a cured product according to a reference embodiment. In this reference embodiment, a coupling agent is used to disperse inorganic particles in an epoxy resin. A cured product 20 includes an epoxy resin 16 and inorganic particles 13. A covering layer 15 resulting from the coupling agent is formed on a surface of inorganic particle 13.

Covering layer 15 is inferior in dielectric breakdown strength to epoxy resin 16. Therefore, when a high voltage is applied from an electrode 14, an insulation deterioration path 17 develops through covering layers 15. In addition, covering layer 15 is lower in heat resistance than epoxy resin 16. Therefore, the heat resistance of cured product 20 as a whole may be reduced.

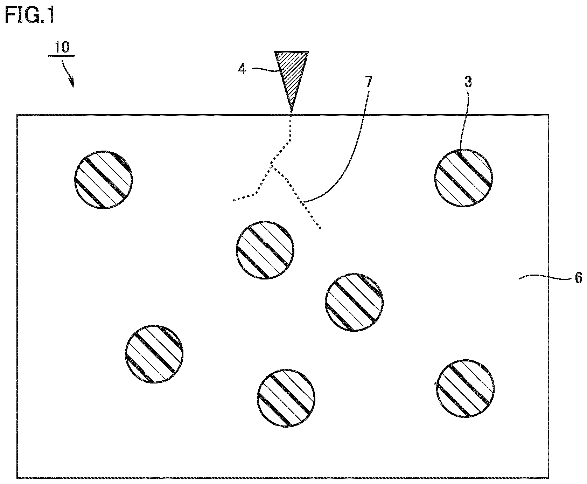

FIG. 1 is a conceptual diagram showing the cured product (Y) according to the first embodiment. A cured product 10 includes an epoxy resin 6 and hydrophilic inorganic particles 3. As described above, epoxy resin 6 includes the first epoxy resin (a1) having a high water solubility. Therefore, in cured product 10, aggregation and precipitation of hydrophilic inorganic particles 3 are suppressed due to interaction between epoxy resin 6 and hydrophilic inorganic particles 3. As a result, occurrence of a void serving as a starting point of partial discharge is also suppressed.

In cured product 10, a uniform dispersed state is achieved without dependence on a coupling agent. That is, cured product 10 does not substantially include the coupling agent. Therefore, even when a high voltage is applied from electrode 4, insulation deterioration path 7 cannot develop long. In addition, a reduction in heat resistance caused by addition of the coupling agent can also be substantially eliminated.

Second Embodiment

A second embodiment of the present invention is directed to a rotary device.

Rotary Device

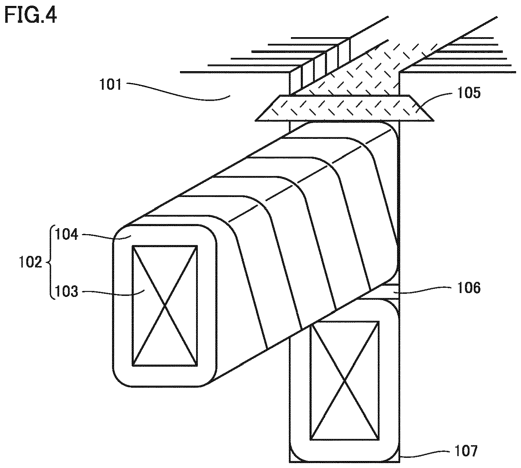

The rotary device may be a generator. The rotary device may be a motor. The generator and the motor normally include a rotor and a stator. FIG. 4 is a schematic view showing a main portion of the rotary device in the second embodiment. FIG. 4 shows a slot outlet portion of the stator of the rotary device.

An overview of the rotary device according to the second embodiment is as follows.

The rotary device includes a rotor (not shown) and a stator 102. Stator 102 includes a coil conductor 103 and an insulating layer 104 covering coil conductor 103. Insulating layer 104 includes the cured product (Y) in the first embodiment. The rotary device is excellent in insulation lifetime and reliability based on the insulation performance and the heat resistance of the cured product (Y).

The stator will be described.

A slot 107 is provided in a stator core 101. Slot 107 is divided into an upper part and a lower part by a spacer 106. Stator 102 is arranged in each of the upper part and the lower part of slot 107. Stator 102 is fixed in slot 107 by a wedge 105. Stator 102 includes coil conductor 103 and insulating layer 104. Insulating layer 104 covers coil conductor 103.

Stator 102 is manufactured as follows. First, an insulation-covered wire is prepared. The wire has conductivity. The wire is made of, for example, copper, aluminum, silver and the like. The wire forms coil conductor 103. A mica tape is wound around coil conductor 103. The mica tape is wound a plurality of times such that a part of the tape overlaps with each other. A width of the overlapping portion is, for example, approximately half of a width of the mica tape.

Next, coil conductor 103 having the mica tape wound therearound is arranged in a prescribed mold. The mold is impregnated with the curable composition (X) in the first embodiment. After impregnation, the mold is pressured and the curable composition (X) is heated. The curable composition (X) may be heated by heating the mold. The curable composition (X) may be heated by heating coil conductor 103. The heating temperature is, for example, approximately not less than 100°C and not more than 250°C.

The pressure is, for example, approximately not less than 5 kg/cm$^2$ and not more than 100 kg/cm$^2$. The pressuring time is, for example, approximately not less than 0.5 hours and not more than 24 hours. The curable composition (X) is thus cured. That is, insulating layer 104 including the cured product (Y) is formed.

After insulating layer 104 is formed, stator 102 is released from the mold. In order to make the mold-release easier, it is preferable to wind the mica tape around coil conductor 103 and then apply a release agent onto a surface thereof. The release agent may be the one commonly used in the art.

Example

Examples will be described below. However, the present invention should not be limited to the examples described below.

Manufacturing of Curable Composition (X) and Cured Product (Y) Thereof

Various types of curable compositions (X) and cured products (Y) thereof were manufactured as follows.

Preparation of Materials

The following materials were prepared.

First Epoxy Resin (a1)

A type: polyglycidyl ether

B type: diglycerol polyglycidyl ether
C type: sorbitol polyglycidyl ether (high molecular weight)
D type: sorbitol polyglycidyl ether
E type: polyethylene glycerol diglycidyl ether
F type: polyethylene glycol glycidyl ether
G type: polyglycidyl ether

Second Epoxy Resin (a2)
bisphenol A-type epoxy resin
Curing Agent (B)
acid anhydride-based curing agent
Curing Promoter (C)
imidazole-based curing promoter
Hydrophilic Inorganic Particles (D)
hydrophilic fumed silica
hydrophobic fumed silica (used in Comparative Example 4)

Examples 1 to 15

In accordance with the blending amount shown in Table 1 below, the hydrophilic inorganic particles (D) were dispersed in the first epoxy resin (a1). A first dispersion liquid was thus prepared (S01). The planetary centrifugal mixer was used for dispersion operation. The rotation speed was set at 2000 rpm and the stirring time was set at 2 minutes.
In accordance with the blending amount shown in Table 1 below, the second epoxy resin (a2) was added to the first dispersion liquid. Using the wet-type high-pressure shear dispersing apparatus, the hydrophilic inorganic particles (D) were crushed and dispersed. The treatment pressure was adjusted to fall within the range of not less than 150 MPa and not more than 200 MPa. A second dispersion liquid was thus prepared (S02).
In accordance with the blending amount shown in Table 1 below, the curing agent (B) and the curing promoter (C) were added to the second dispersion liquid and the mixture was stirred. After stirring, vacuum deaeration treatment was performed. As described above, the curable composition (X) was prepared (S03).

Comparative Example 1

In accordance with the blending amount shown in Table 1 below, a curable composition was prepared in the same manner as described above. As shown in Table 1 below, Comparative Example 1 is an example in which the aqueous dissolution rate of the first epoxy resin (a1) exceeds 99 mass %.

Comparative Example 2

As shown in Table 1 below, a curable composition was prepared in the same manner as Examples 1 to 15, except that the first epoxy resin (a1) was not blended.

Comparative Example 3

As shown in Table 1 below, a curable composition was prepared in the same manner as Examples 1 to 15, except that the hydrophilic inorganic particles (D) were not blended.

Comparative Example 4

As shown in Table 1 below, a curable composition was prepared in the same manner as Examples 1 to 15, except that the hydrophobic inorganic particles were blended instead of the hydrophilic inorganic particles (D).

Comparative Example 5

In accordance with the composition shown in Table 1 below, a curable composition was prepared in the same manner as described above. Comparative Example 5 is an example in which the aqueous dissolution rate of the first epoxy resin (a1) is less than 20 mass %.

Table 1

Table 1 List of Blending and Evaluation Result of Curable Composition

| | (A) Epoxy resin | | | | | | (B) Curing agent | | (C) Curing promoter | | (D) Hydrophilic inorganic particles | | dispersibility | moldability | initial breakdown voltage | partial discharge resistance | heat resistance |
| | (a1) First epoxy resin | | | | (a2) Second epoxy resin | | | | | | | | | | | | |
| | type | amount | aqueous dissolution rate | viscosity | type | amount | type | amount | type | amount | amount | particle size | | | | | |
| | | vol. % | mass % | mPa•s | | vol. % | | | | | vol. % | nm | | | | | |
| Example 1 | A type | 25 | 64 | 170 | bisphenol A-type | 71 | acid anhydride-based curing agent | 0.5 equivalent with respect to epoxy equivalent of (A) | imidazole-based curing promoter | 0.5 mass % with respect to (A) | 4 | 82 | B | B | B | B | B |
| Example 2 | A type | 25 | 64 | 170 | | 67 | | | | | 8 | 7 | B | C | B | B | B |
| Example 3 | A type | 25 | 64 | 170 | | 67 | | | | | 8 | 40 | A | A | A | A | A |
| Example 4 | A type | 25 | 64 | 170 | | 67 | | | | | 8 | 40 | A | A | A | A | A |
| Example 5 | A type | 25 | 64 | 170 | | 52 | | | | | 23 | 40 | A | A | A | A | A |
| Example 6 | A type | 25 | 64 | 170 | | 29 | | | | | 46 | 40 | B | B | B | B | A |
| Example 7 | B type | 25 | 88 | 650 | | 50 | | | | | 25 | 40 | B | B | B | B | B |
| Example 8 | C type | 25 | 94 | 5000 | | 50 | | | | | 25 | 40 | B | C | B | B | B |
| Example 9 | A type | 25 | 99 | 150 | | 50 | | | | | 25 | 40 | B | C | B | B | B |
| Example 10 | A type | 25 | 64 | 170 | | 73 | | | | | 2 | 7 | C | C | B | B | B |
| Example 11 | A type | 25 | 64 | 170 | | 67 | | | | | 8 | 0.5 | B | A | B | B | B |
| Example 12 | A type | 25 | 64 | 170 | | 67 | | | | | 8 | 1200 | B | A | B | B | B |
| Example 13 | A type | 25 | 64 | 170 | | 21 | | | | | 54 | 40 | C | B | B | B | B |
| Example 14 | D type | 25 | 78 | 21200 | | 50 | | | | | 25 | 40 | B | C | B | B | B |
| Example 15 | E type | 25 | 20 | 2700 | | 67 | | | | | 8 | 40 | B | B | B | B | B |
| Comparative Example 1 | F type | 25 | 100 | 70 | | 50 | | | | | 25 | 40 | C | C | C | C | C |
| Comparative Example 2 | - | 0 | - | - | | 75 | | | | | 25 | 40 | C | C | C | C | B |
| Comparative Example 3 | A type | 25 | 64 | 170 | | 75 | | | | | 0 | - | - | A | C | C | C |
| Comparative Example 4 | A type | 25 | 64 | 170 | | 67 | | | | | 8 (hydrophobic) | 7 | C | B | C | C | B |
| Comparative Example 5 | G type | 25 | 13 | 3200 | | 67 | | | | | 8 | 40 | C | C | C | C | A |

Evaluation

The materials and the curable compositions were evaluated as follows.

Aqueous dissolution rate

The aqueous dissolution rate of the first epoxy resin (a1) was measured using the above-described method. The result is shown in Table 1 above.

Viscosity

The viscosity of the first epoxy resin (a1) was measured using the E-type viscometer. The result is shown in Table 1 above.

Dispersibility

The dispersibility of the curable composition was evaluated using the precipitation method. The evaluation procedure was as follows. The curable composition was put into a glass container. The glass container was shaken well, and then, was left to stand. After being left to stand, the glass container was irradiated with light from one side and the transparency of the curable composition was evaluated from the side that was not irradiated with light. The dispersibility was evaluated using the three levels of A, B and C. The dispersibility in Example 1 was used as the reference, and the dispersibility higher than the reference was denoted by A, the dispersibility equivalent to the reference was denoted by B, and the dispersibility lower than the reference was denoted by C. The result is shown in Table 1 above.

Average Value of Primary Particle Size

The curable composition was heated at 150°C for 180 minutes. The cured product was thus obtained. An average value of a primary particle size of the inorganic particles included in the cured product was measured using the SEM. The primary particle size of 10 particles was measured. An arithmetic average value of the 10 particles was obtained. The result is shown in Table 1 above.

Moldability

The moldability of the cured product was evaluated using a mold-releasing test. The evaluation procedure was as follows. A plate-like mold was prepared. The curable composition was injected into the plate-like mold. By heating the curable composition, the curable composition was cured to thereby obtain a plate-like cured product. The cured product was removed from the mold. The ease of removal of the cured product was evaluated using the following three levels. A represents the case in which the cured product could be removed easily, B represents the case in which the cured product could be removed without occurrence of breakage in the cured product, and C represents the case in which the cured product was brittle and breakage occurred during removal. The result is shown in Table 1 above.

Heat Resistance

The heat resistance of the cured product was evaluated using a glass transition temperature (Tg). Tg was obtained by dynamic viscoelasticity measurement. The measurement was performed in a tensile mode. Tg corresponded to a temperature at which tan$\delta$ peaked in a graph showing temperature dependence of a loss tangent (tan$\delta$). Tg in Example 1 was used as the reference, and Tg higher than the reference was denoted by A, Tg equivalent to the reference was denoted by B, and Tg lower than the reference was denoted by C. The result is shown in Table 1 above. As Tg becomes higher, the heat resistance becomes better.

Initial Breakdown Voltage

The initial breakdown voltage of the cured product was evaluated by a dielectric breakdown test. The dielectric breakdown strength was measured in conformity with "JIS C 2110-1 Solid Electrical Insulating Material -Method for Testing Dielectric Breakdown Strength- Chapter 1: Test by Application of AC Voltage Having Commercial Frequency". The measurement was performed ten times. An arithmetic average value of the results of the ten measurements was used as a representative value. The initial breakdown voltage was evaluated using the three levels of A, B and C. The dielectric breakdown strength in Example 1 was used as the reference, and the dielectric breakdown strength higher than the reference was denoted by A, the dielectric breakdown strength equivalent to the reference was denoted by B, and the dielectric breakdown strength lower than the reference was denoted by C. The result is shown in Table 1 above.

Partial Discharge Resistance

The partial discharge resistance was evaluated using a partial discharge inception voltage (PDIV). The measurement of the PDIV was performed ten times. An arithmetic average value of the results of the ten measurements was used as a representative value. The partial discharge resistance was evaluated using the three levels of A, B and C. The PDIV in Example 1 was used as the reference, and the PDIV higher than the reference was denoted by A, the PDIV equivalent to the reference was denoted by B, and the PDIV lower than the reference was denoted by C. The result is shown in Table 1 above. Note: all Examples shown in Table 1 are illustrative only.

Results and Discussion

As can be seen from Table 1 above, the insulation performance (the initial breakdown voltage and the partial discharge resistance) is better in Examples 1 to 15 than in Comparative Examples 1 to 5, and a reduction in heat resistance caused by this is suppressed in Examples 1 to 15 as compared with Comparative Examples 1 to 5. This may be because the dispersibility of the hydrophilic inorganic particles (D) is improved due to interaction between the hydrophilic inorganic particles (D) and the first epoxy resin (a1) having an aqueous dissolution rate of not less than 20 mass % and not more than 99 mass %.

Based on the results of Example 1 and Comparative Example 1, the aqueous dissolution rate of the first epoxy resin (a1) will be discussed.

In order to increase the aqueous dissolution rate of the epoxy resin, it is necessary not only to introduce a hydrophilic group such as a hydroxy group or an ether group but also to reduce a ratio of unsaturated bonds (double bonds and triple bonds) in a molecular skeleton and relatively increase a ratio of saturated bonds (single bonds). However, when the ratio of unsaturated bonds decreases, the heat resistance decreases.

In Example 1 (aqueous dissolution rate: 64 mass %), the ratio between saturated bonds and unsaturated bonds in the molecule is suitable, and thus, a balance between the aqueous dissolution rate and the heat resistance can be achieved. On the other hand, in Comparative Example 1 (aqueous dissolution rate: 100 mass %), the ratio of unsaturated bonds is excessively low, and thus, the heat resistance is reduced.

Based on the results of Example 1, Comparative Example 2 and Comparative Example 4, the dispersibility of the hydrophilic inorganic particles (D) will be discussed.

In the curable composition in Example 1, the first epoxy resin (a1) having the high aqueous dissolution rate surrounds the hydrophilic inorganic particles (D), and thus, the dispersibility of the hydrophilic inorganic particles (D) is improved and the dispersed state is stable. In contrast, in Comparative Example 2 in which the first epoxy resin (a1) is not included, aggregation of the hydrophilic inorganic particles (D) is likely to occur. Therefore, even when the hydrophilic inorganic particles (D) are dispersed, re-aggregation of the hydrophilic inorganic particles (D) occurs subsequently. As a result of aggregation and precipitation of the hydrophilic inorganic particles (D), a void serving as a starting point of insulation deterioration and partial discharge is formed. As a result, the initial breakdown voltage and the partial discharge resistance are reduced.

In Comparative Example 4, the first epoxy resin (a1) having the high aqueous dissolution rate is included. However, the inorganic particles are hydrophobic. Therefore, the inorganic particles do not have an affinity for the first epoxy resin (a1), and thus, the dispersibility is reduced. As a result, the initial breakdown voltage and the partial discharge resistance are reduced.

Superiority or inferiority of the initial breakdown voltage and the partial discharge resistance among Example 3, Example 11 and Example 12 can be explained using the average value of the primary particle size of the hydrophilic inorganic particles (D).

That is, it is conceivable that when the primary particle size is larger than the insulation deterioration path, development of the insulation deterioration path is likely to be inhibited. On the other hand, when the primary particle size is excessively large, precipitation is likely to occur, and thus, the dispersibility cannot be maintained and the insulation performance is reduced. Therefore, it is conceivable that there is an appropriate range that can achieve a balance between these, for the average value of the primary particle size. Based on this result, the range is concluded to be not less than 0.5 nm and not more than 1200 nm.

Example 16 Inventive

As the unsaturated polyester resin (a3), an unsaturated polyester resin (epoxy(meth)acrylate) having a hydrophilic group was added to each of 15 types of curable compositions (X) similar to those in Examples 1 to 15 in an amount of 0, 10 or 23 volume % with respect to a total amount (i.e., a total amount of the curable composition (X) similar to those in Examples 1 to 15 and the unsaturated polyester resin (a3)) of a mixture (curable composition in this Example). Furthermore, as a curing agent for the unsaturated polyester resin (a3), alkyl ketone peroxide was added in an amount of 1 mass % with respect to the amount of the added unsaturated polyester resin (a3), and as a curing promoter for the unsaturated polyester resin (a3), naphthenic acid metal soap was added in an amount of 0.5 mass % with respect to the amount of the added unsaturated polyester resin (a3).

Curable compositions (X) and cured products (Y) thereof were manufactured similarly to Examples 1 to 15 except for the foregoing points. At this time, the curing time of each curable composition (X) was measured. The curing time was determined based on the gelling time of a resin composition, and a time point at which the resin composition turned into a gel and lost fluidity was defined as the curing time.

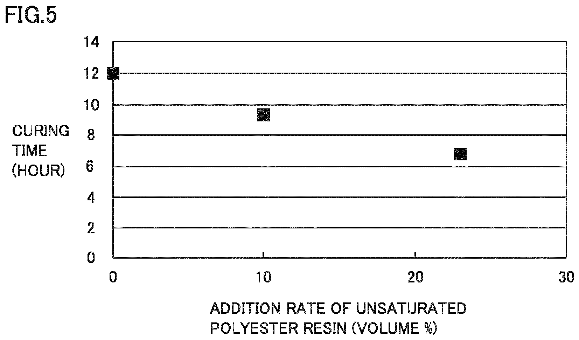

FIG. 5 shows a graph showing a plotted relation between an addition rate of the unsaturated polyester resin (a3) and the curing time of the curable composition (X). FIG. 5 shows only the result in the case of using the curable composition (X) similar to that in Example 3. Based on the result in FIG. 5, it can be seen that the addition of the unsaturated polyester resin (a3) results in a reduction in the curing time of the curable composition (X). This may be because the addition of the unsaturated polyester resin (a3) allows three-dimensional crosslinking to progress efficiently as described above, and thus, the crosslink density increases in a short time.

The embodiments and examples disclosed herein are illustrative in every respect. The embodiments and examples disclosed herein should not be construed to be restrictive.

The scope of the present invention is defined by the terms of the claims, rather than the description above. The scope of the present invention includes any modifications within the meaning equivalent to the terms of the claims. The scope of the present invention also includes any modifications within the scope equivalent to the terms of the claims.

REFERENCE SIGNS LIST

| | |
|---|---|
| 3 | hydrophilic inorganic particle |
| 4, 14 | electrode |
| 6, 16 | epoxy resin |
| 7, 17 | insulation deterioration path |
| 10, 20 | cured product |
| 13 | inorganic particle |
| 15 | covering layer |
| 101 | stator core |
| 102 | stator |
| 103 | coil conductor |
| 104 | insulating layer |
| 105 | wedge |
| 106 | spacer |
| 107 | slot |

**Claims**

1. A curable composition comprising:

   - an epoxy resin (6,16);
   - a curing agent;
   - a curing promoter; and
   - hydrophilic inorganic particles (3),

   the epoxy resin (6,16) including a first epoxy resin (a1) and a second epoxy resin (a2),
   the first epoxy resin (a1) being a chain aliphatic epoxy resin having a hydrophilic group, and an aqueous dissolution rate of the first epoxy resin (a1) being not less than 20 mass % and not more than 99 mass %, wherein the aqueous dissolution rate means a dissolution rate of an epoxy resin to water at room temperature (25 °C), as measured by the method described in the present specification,
   the second epoxy resin (a2) including at least one selected from the group consisting of a cyclic aliphatic epoxy resin, an aromatic epoxy resin and a heterocyclic epoxy resin,

the first epoxy resin (a1) comprising, as at least one resin included therein, an unsaturated polyester resin (a3) including two or more (meth)acryloyl groups in one molecule and having a hydrophilic group, the unsaturated polyester resin (a3) being an epoxy acrylate resin obtained by introducing a (meth)acryloyl group into an epoxy resin having a hydrophilic group.

2. The curable composition according to claim 1, wherein the first epoxy resin is a glycidyl ether compound.

3. The curable composition according to claim 1 or 2, wherein the first epoxy resin is a polyglycidyl ether compound having a glycerol skeleton.

4. The curable composition according to any one of claims 1 to 3, wherein a ratio of the first epoxy resin to a total of the first epoxy resin and the second epoxy resin is not less than 26 volume % and not more than 54 volume %.

5. The curable composition according to any one of claims 1 to 4, wherein the first epoxy resin has a viscosity of not less than 20 mPa•s and not more than 21200 mPa•s, wherein the viscosity is measured using an E-type viscometer, a measurement temperature is set at 25 ± 1 °C, and a rotation speed of the viscometer is set at 40 rpm or depending on the viscosity of an object to be measured within the range of 10 to 120 rpm.

6. The curable composition according to any one of claims 1 to 5, wherein the hydrophilic inorganic particles (3) have hydrophilic groups on surfaces.

7. The curable composition according to any one of claims 1 to 6, wherein surfaces of the hydrophilic inorganic particles (3) are covered with hydrophilic polymers.

8. The curable composition according to any one of claims 1 to 7, wherein an average value of a primary particle size of the hydrophilic inorganic particles (3) is not less than 0.5 nm and not more than 1200 nm, wherein the average value of the primary particle size is measured by an image analysis method using a scanning electron microscope (SEM) and wherein the particle size refers to a Feret diameter.

9. The curable composition according to any one of claims 1 to 8, wherein the curable composition includes not less than 2 volume % and not more than 54 volume % of the hydrophilic inorganic particles (3).

10. A cured product (10, 20) of the curable composition as recited in any one of claims 1 to 9.

11. A rotary device comprising

- a rotor and a stator (102),
- the stator (102) including a coil conductor (103) and an insulating layer (104) covering the coil conductor (103),
- the insulating layer (104) including the cured product (10, 20) of the curable composition as recited in claim 10.

**Patentansprüche**

1. Härtbare Zusammensetzung, welches Folgendes aufweist:

- ein Epoxidharz (6, 16);
- ein Härtungsmittel,
- einen Härtungsförderer, und
- hydrophile anorganische Teilchen (3),

wobei das Epoxidharz (6, 16) ein erstes Epoxidharz (a1) und ein zweites Epoxidharz (a2) beinhaltet, wobei das erste Epoxidharz (a1) ein kettenförmiges aliphatisches Epoxidharz mit einer hydrophilen Gruppe ist, und eine Lösungsgeschwindigkeit in Wasser des ersten Epoxidharzes (a1) nicht unter 20 Masse-% und nicht über als 99 Masse-% liegt, wobei die Lösungsgeschwindigkeit in Wasser eine Lösungsgeschwindigkeit von Epoxidharz in Wasser bei einer Raumtemperatur (25°C) bedeutet, so wie sie mittels der in der vorliegenden Spezifikation beschriebenen Messung gemessen wird,

das zweite Epoxidharz (a2) mindestens ein Harz beinhaltet, das aus der aus einem cycloaliphatischen Epoxidharz, einem aromatischen Epoxidharz und einem heterozyklischen Epoxidharz bestehenden Gruppe ausgewählt wird, wobei das erste Epoxidharz (a1) als mindestens ein darin enthaltenes Harz ein ungesättigtes Polyesterharz (a3) aufweist, welches zwei oder mehrere (Meth)acryloyl-Gruppen in einem Molekül beinhaltet und eine hydrophile Gruppe aufweist,

das ungesättigte Polyesterharz (a3) ein Epoxyacrylatharz ist, welches durch Einführen einer (Meth)acryloyl-Gruppe in ein Epoxidharz, das eine hydrophile Gruppe aufweist, erzielt wird.

2. Härtbare Zusammensetzung gemäß Anspruch 1, wobei das erste Epoxidharz eine Glycidyletherverbindung ist.

3. Härtbare Zusammensetzung gemäß Anspruch 1 oder 2, wobei das erste Epoxidharz eine Polyglycidyletherverbindung mit einem Glycerin-Gerüst ist.

4. Härtbare Zusammensetzung gemäß einem der Ansprüche 1 bis 3, wobei ein Verhältnis des ersten Epoxidharzes zu einer Gesamtheit aus dem ersten Epoxidharz und dem zweiten Epoxidharz nicht unter 26 Volumen-% und nicht über 54 Volumen-% liegt.

5. Härtbare Zusammensetzung gemäß einem der Ansprüche 1 bis 4, wobei das erste Epoxidharz eine Viskosität von nicht unter 20 mPA•s und nicht über 21200 mPa•s aufweist, wobei die Viskosität unter Verwendung eines Viskosimeters des E-Typs gemessen wird, eine Messtemperatur auf 25 ± 1 °C eingestellt wird, und eine Rotationsgeschwindigkeit des Viskosimeters auf 40 rpm oder, in Abhängigkeit von der zu messenden Viskosität eines Objekts, innerhalb eines Bereichs von 10 bis 120 rpm eingestellt wird.

6. Härtbare Zusammensetzung gemäß einem der Ansprüche 1 bis 5, wobei die hydrophilen anorganischen Teilchen (3) hydrophile Gruppen auf Oberflächen aufweisen.

7. Härtbare Zusammensetzung gemäß einem der Ansprüche 1 bis 6, wobei die Oberflächen der hydrophilen anorganischen Teilchen (3) mit hydrophilen Polymeren bedeckt sind.

8. Härtbare Zusammensetzung gemäß einem der Ansprüche 1 bis 7, wobei ein Durchschnittswert einer Primärteilchengröße der hydrophilen anorganischen Teilchen (3) nicht unter 0,5 nm und nicht über 1200 nm liegt, wobei der Durchschnittswert der Primärteilchengröße mittels eines Bildanalyseverfahrens unter Verwendung eines Rasterelektronenmikroskops (SEM) gemessen wird, und wobei die Teilchengröße sich auf einen Feret-Durchmesser bezieht.

9. Härtbare Zusammensetzung gemäß einem der Ansprüche 1 bis 8, wobei die härtbare Zusammensetzung nicht weniger als 2 Volumen-% und nicht mehr als 54 Volumen-% der hydrophilen anorganischen Teilchen (3) enthält.

10. Gehärtetes Produkt (10, 20) der härtbaren Zusammensetzung gemäß einem der Ansprüche 1 bis 9.

11. Drehvorrichtung, welches Folgendes aufweist:

    - einen Rotor und einen Stator (102),
    - wobei der Stator (102) einen Spulenleiter (103) und eine den Spulenleiter (103) abdeckende Isolierschicht (104) beinhaltet,
    - wobei die Isolierschicht (104) das gehärtete Produkt (10, 20) der härtbaren Zusammensetzung gemäß Anspruch 10 beinhaltet.

**Revendications**

1. Composition durcissable comprenant :

    - une résine époxy (6, 16) ;
    - un agent de durcissement ;

- un activateur de durcissement ; et
- des particules inorganiques hydrophiles (3),

la résine époxy (6, 16) incluant une première résine époxy (a1) et une deuxième résine époxy (a2), la première résine époxy (a1) étant une résine époxy aliphatique à chaîne ayant un groupe hydrophile, et un taux de dissolution dans l'eau de la première résine époxy (a1) n'étant pas inférieur à 20 % en masse et pas supérieur à 99 % en masse, dans laquelle le taux de dissolution dans l'eau signifie un taux de dissolution d'une résine époxy dans de l'eau à température ambiante (25 °C), tel que mesuré par le procédé décrit dans la présente description, la deuxième résine époxy (a2) incluant au moins une résine sélectionnée parmi le groupe constitué de résine époxy aliphatique cyclique, résine époxy aromatique et résine époxy hétérocyclique, la première résine époxy (a1) comprenant, en tant qu'au moins une résine incluse à l'intérieur de celle-ci, une résine polyester non saturée (a3) incluant deux ou plusieurs groupes (méth)acryloyle dans une molécule et ayant un groupe hydrophile, la résine polyester non saturée (a3) étant une résine acrylate époxy obtenue en introduisant un groupe (méth)acryloyle dans une résine époxy ayant un groupe hydrophile.

2. Composition durcissable selon la revendication 1, dans laquelle la première résine époxy est un composé d'éther glycidylique.

3. Composition durcissable selon la revendication 1 ou 2, dans laquelle la première résine époxy est un composé d'éther polyglycidylique ayant un squelette glycérol.

4. Composition durcissable selon l'une quelconque des revendications 1 à 3, dans laquelle le rapport de la première résine époxy sur un total de la première résine époxy et de la deuxième résine époxy n'est pas inférieur à 26 % en volume et n'est pas supérieur à 54 % en volume.

5. Composition durcissable selon l'une quelconque des revendications 1 à 4, dans laquelle la première résine époxy a une viscosité qui n'est pas inférieure à 20 mPa•s et pas supérieure à 21 200 mPa•s, dans laquelle la viscosité est mesurée en utilisant un viscosimètre de type E, une température de mesurage est fixée à 25 +/- 1 °C, et une vitesse de rotation du viscosimètre est fixée soit à 40 tpm, soit en dépendance de la viscosité d'un objet qu'il s'agit de mesurer, à l'intérieur de la plage de 10 à 120 tpm.

6. Composition durcissable selon l'une quelconque des revendications 1 à 5, dans laquelle les particules inorganiques hydrophiles (3) ont des groupes hydrophiles sur des surfaces.

7. Composition durcissable selon l'une quelconque des revendications 1 à 6, dans laquelle des surfaces des particules inorganiques hydrophiles (3) sont couvertes de polymères hydrophiles.

8. Composition durcissable selon l'une quelconque des revendications 1 à 7, dans laquelle une valeur moyenne d'une taille particulaire primaire des particules inorganiques hydrophiles (3) n'est pas inférieure à 0,5 nm et n'est pas supérieure à 1 200 nm, dans laquelle la valeur moyenne de la taille particulaire primaire est mesurée par un procédé d'analyse d'image utilisant un microscope électronique à balayage (SEM) et dans laquelle la taille particulaire se réfère à un diamètre de Féret.

9. Composition durcissable selon l'une quelconque des revendications 1 à 8, dans laquelle la composition durcissable n'inclut pas moins de 2 % en volume et pas plus de 54 % en volume des particules inorganiques hydrophiles (3).

10. Produit durci (10, 20) de la composition durcissable selon l'une quelconque des revendications 1 à 9.

11. Dispositif rotatif comprenant

- un rotor et un stator (102),
- le stator (102) incluant un conducteur en bobine (103) et une couche d'isolation (104) couvrant le conducteur en bobine (103),
- la couche d'isolation (104) incluant le produit durci (10, 20) de la composition durcissable selon la revendication 10.

FIG.1

FIG.2

FIG.3

FIG.4

FIG.5

CURING
TIME
(HOUR)

ADDITION RATE OF UNSATURATED
POLYESTER RESIN (VOLUME %)

**EP 3 438 200 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006057017 A
- JP 2005330390 A
- JP 2005263855 A
- US 2015349599 A1
- JP S55166467 A
- WO 2015056508 A1